# EUROPÄISCHE PATENTANMELDUNG

(11) **EP 4 272 930 A1**
(43) Veröffentlichungstag der Anmeldung: **08.11.2023**
(21) Anmeldenummer: 23171122.7
(22) Anmeldetag: 02.05.2023
(51) Int. Cl.: B29C 64/106, B29C 64/40, B33Y 10/00, B33Y 30/00

(54) **SCHACHTBAUTEIL ODER SCHACHT**

(30) Priorität: 05.05.2022 DE 102022111210
(71) Anmelder: REHAU Industries SE & Co. KG, 95111 Rehau (DE)
(72) Erfinder: Gareis, Jürgen, 95233 Helmbrechts (DE); Häupler, Bernhard, 95032 Hof (DE); Staschik, Peter, 91325 Adelsdorf (DE); Wilfert, Jonas, 95111 Rehau (DE); Winter, Kevin, 95111 Rehau (DE)

(57) **Zusammenfassung**

Die Erfindung betrifft ein Verfahren zur Herstellung eines Bauteils, insbesondere eines Schachtbauteils (100) mit wenigstens einem Gerinne, wenigstens einem Rand, sowie wenigstens zwei Anschlüssen, im Wege der additiven Fertigung, wobei die additive Fertigung auf einem Basiselement erfolgt, welches eine ebene Auflagefläche für die additive Fertigung bildet, wobei als Werkstoff (4) für das Bauteil ein Polymer, vorzugsweise ein erster Thermoplast oder ein Duroplast, verwendet wird, wobei das Gerinne, der Rand sowie die wenigstens zwei Anschlüsse wenigstens teilweise durch schichtweises Auftragen des Polymers im Schmelzezustand erzeugt wird, wobei wenigstens ein Verbindungsabschnitt mit dem Rand stoffschlüssig verbunden wird. Schließlich betrifft die Erfindung auch einen Schacht, sowie ein Fluidleit-, -aufnahme- und -speichersystem mit wenigstens einem Schacht.

## Beschreibung

Die Erfindung betrifft ein Verfahren zur Herstellung eines Bauteils, insbesondere eines Schachtbauteils, mit wenigstens einem Gerinne, wenigstens einem Rand, sowie wenigstens zwei Anschlüssen, im Wege der additiven Fertigung. Schließlich betrifft die Erfindung auch einen Schacht, sowie ein Fluidleit-, -aufnahme- und -speichersystem mit wenigstens einem Schacht.

Schachtsysteme für Schmutz- und Regenwasser werden heute aus Beton, Stahlbeton oder Kunststoff hergestellt. Üblicherweise werden zur Realisierung von Abwassernetzen alle Abwinklungen und Zusammenführungen der angeschlossenen Rohrleitungen in den Schachtbauteilen selbst durchgeführt, damit diese kritischen Punkte dauerhaft zugänglich sind und im Falle von Verstopfungen oder ähnlichem leicht gereinigt werden können.

Es zeigt sich aber, dass in nahezu jedem Abwasserkanalnetz eine große Anzahl von auftragsbezogen angefertigten Sonderschächten notwendig ist, deren Gerinne speziell nach den Vorgaben des Tiefbauplaners angefertigt werden muss, was beispielsweise die Winkel der Zuläufe, die Anzahl der Zuläufe, die Nennweiten, die Gefälle im Schachtunterteil und anderes mehr angeht. Derartige individuell gefertigte Schächte bzw. Schachtbauteile oder -unterteile werden bei einer Ausführung in Kunststoff entweder tiefgezogene Schalen in einen Ring eingeschweißt oder aus polymeren Halbzeugen, wie Rohren, Platten und Formteilen, durch einen Konfektionsprozess entsprechende Gerinneformen ausgebildet und stoffschlüssig in einen Ring eingeschweißt.

Derartige individuell hergestellte Schächte oder Schachtbauteile bzw. -unterteile erfordern zur manuellen oder teilautomatisierten Konfektion eine exakte Vorplanung.

Für den anschließenden komplexen, meist manuellen Herstellungsprozess ist ein hoher Arbeitszeitaufwand notwendig. Als Folge dessen sind derartige individuell hergestellte Schächte oder Schachtbauteile bzw. -unterteile teuer, was die Herstellkosten angeht. Aufgrund der geringen Stückzahl solcher Schächte bzw. Schachtbauteile oder -unterteile ist eine Investition in entsprechende Spritzguss- oder Tiefziehwerkzeuge nicht wirtschaftlich.

Schließlich ist noch zu beachten, dass durch Lageabweichungen der eingemessenen Leitungen, aufgrund von unbekannten Bodenhindernissen oder wegen kreuzenden Leitungen nach erfolgter Planung die Ausführungspläne noch während der Bauphase anzupassen oder zu ändern sind. Im Vorfeld konfektionierte individuelle Schächte bzw. Schachtbauteile oder -unterteile müssen in diesem Fall entweder verworfen oder neu gebaut oder aufwendig manuell umgebaut werden.

Hier setzt die Erfindung ein, deren Aufgabe es ist, ein additives Verfahren zur Herstellung eines Bauteils, insbesondere eines Schachtbauteils anzugeben, welches die Nachteile des Standes der Technik überwindet, welches wirtschaftlich und kostengünstig realisierbar ist, welches mit einem geringen bzw. optimalen Materialeinsatz individuell fertigbare Bauteile, insbesondere Schachtbauteile zulässt.

Schließlich ist es noch eine Aufgabe der vorliegenden Erfindung, einen Schacht, sowie ein Fluidleit-, -aufnahme- und -speichersystem anzugeben, welches einen solchen Schacht aufweist.

Die erste Aufgabe wird erfindungsgemäß gelöst durch ein Verfahren zur Herstellung eines Bauteils, insbesondere eines Schachtbauteils gemäß den Merkmalen des Anspruches 1. Weitere vorteilhafte Ausgestaltungen sind in den Unteransprüchen beschrieben.

Überraschenderweise konnte festgestellt werden, dass durch ein Verfahren zur Herstellung eines Bauteils, insbesondere eines Schachtbauteils mit wenigstens einem Gerinne, wenigstens einem Rand, sowie wenigstens zwei Anschlüssen, im Wege der additiven Fertigung, wobei die additive Fertigung auf einem Basiselement erfolgt, welches eine ebene Auflagefläche für die additive Fertigung bildet, wobei als Werkstoff für das Bauteil ein Polymer, vorzugsweise ein erster Thermoplast oder ein Duroplast, verwendet wird, wobei das Gerinne, der Rand sowie die wenigstens zwei Anschlüsse wenigstens teilweise durch schichtweises Auftragen des Polymers im Schmelzezustand erzeugt wird, wobei wenigstens ein Verbindungsabschnitt mit dem Rand stoffschlüssig verbunden wird, die Aufgabe der Erfindung gelöst wird. Vorteilhafterweise sind somit Bauteile, insbesondere Schachtbauteile zur Verfügung stellbar, die wirtschaftlich und kostengünstig, sowie auch schnell und in kürzester Zeit, herstellbar sind. Die Erfindung beruht auf der Erkenntnis, dass die Bauteile, insbesondere Schachtbauteile mit einem geringen bzw. optimalen Materialeinsatz individuell gestaltbar/fertigbar, die den jeweiligen Anforderungen an den Einbau, die Geometrie der anzuschließenden Leitungen und dergleichen zur Verfügung stellbar sind.

Es liegt weiter im Rahmen der Erfindung, dass das Basiselement in einem Spritzgussprozess und / oder in einem Extrusionsprozess und / oder in einem Kalandrierprozess und / oder in einem Gießprozess und / oder in einem Pressprozess und/oder in einem additiven schichtweisen Polymerauftragsprozess oder in einer Kombination der vorstehend Genannten gebildet wird. Vorteilhafterweise ist somit das Basiselement in einem wirtschaftlichen und kostengünstigen Herstellungsverfahren zur Verfügung stellbar. Weiterhin vorteilhaft ist, dass das Basiselement den jeweiligen geometrischen und statischen Anforderungen in der jeweiligen Einbausituation optimal anpassbar ist, durch beispielsweise geometrische Anpassungen wie unterschiedliche Dicken, Durchmesser aber auch unterschiedliche Materialien und unterschiedliche geometrische Formen.

Vorteilhafterweise bei dem Verfahren zur Herstellung eines Bauteils, insbesondere eines Schachtbauteils ist, dass das Basiselement aus einem zweiten und/oder einem dritten Thermoplast, bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist, besonders bevorzugt einem Polyolefin, und ganz besonders bevorzugt aus einem Polypropylen hergestellt wird oder ein solches enthält. In einer besonders vorteilhaften Ausführung der Erfindung entspricht der zweite Thermoplast in der Zusammensetzung vollständig oder zumindest teilweise dem ersten und/oder dem dritten Thermoplast. Diese Werkstoffe sind einerseits preiswert herstellbar/verwendbar, weisen andererseits vorteilhafterweise ein geringes Gewicht auf und sind zudem noch korrosionsfest sowie chemikalienbeständig.

Weiterhin vorteilhaft bei dem Verfahren zur Herstellung eines Bauteils, insbesondere eines Schachtbauteils ist, dass das bei der additiven Fertigung verwendete/ aufgetragene Polymer, vorzugsweise ein erster Thermoplast, zumindest im Wesentlichen dem zweiten und/oder dem dritten Thermoplast des Basiselements entspricht. Dies führt zu einer wirtschaftlichen und kostengünstigen Herstellung sowie zu einer optimalen, stoffschlüssigen Verbindung der Bestandteile des Bauteils, insbesondere des Schachtbauteils.

Ebenfalls vorteilhafterweise bei dem Verfahren zur Herstellung eines Bauteils, insbesondere eines Schachtbauteils ist, dass das Basiselement aus einem Duroplast, insbesondere aus einem Kondensationsharz wie Aminoharz, Phenolharz, Harnstoffharz sowie Melaminharz, aus einem Reaktionsharz wie Epoxidharz, Polyurethane (vernetzbar), Polyesterharze (ungesättigt), aus Isocyanaten, Acrylaten, Methacrylaten, Cyanatharz, Benzoxazinharz, sowie Kombination dieser hergestellt wird oder ein solches enthält.

Ebenfalls vorteilhaft bei dem Verfahren zur Herstellung eines Bauteils, insbesondere eines Schachtbauteils ist, dass das bei der additiven Fertigung aufgetragene Polymer, vorzugsweise ein erster Thermoplast oder ein Duroplast, Füll- und/oder Verstärkungsstoffe von anteilig 1 bis 45 Gew.-%, bevorzugt 1 bis 30 Gew.-%, besonders bevorzugt 5 bis 25 Gew.-%, bezogen auf das Gesamtgewicht, enthält.

Die Füll- und/oder Verstärkungsstoffe sind partikelförmig und/oder sphärolitisch und/oder faserförmig und/oder plättchenförmig und/oder kugelförmig und/oder stäbchenförmig ausgebildet.

Bevorzugt ist der Füll- und/oder Verstärkungsstoff ausgewählt aus Talkum, Kreide, Kaolin, Wollastonit, Glimmer, Glasfasern, Glaskugeln, Hohlglaskugeln, Metallpartikel, Metallpulver, Metallfasern, Graphit, Leitruß, Holzmehl, Holzfasern, Bambusmehl, Bambusfasern, Aluminiumoxid, Aluminiumsilikat, oder einer Mischung der Vorgenannten.

Weiterhin bevorzugt sind faserförmige Füll- und/oder Verstärkungsstoffe, besonders bevorzugt Glas- und/oder Kohlefasern. Dies führt vorteilhafterweise zu einer hohen Festigkeit bzw. Steifigkeit des herzustellenden Bauteils, insbesondere Schachtbauteils sowie zu einer wirtschaftlicheren und kostengünstigeren Herstellung.

Weiterhin vorteilhaft ist, dass durch die Menge und/oder die Art der Füll- und/oder Verstärkungsstoffe insbesondere die 3D-Druckbarkeit optimiert ist. Insbesondere die erzielbaren Schmelzesteifigkeiten, der Schrumpf des Bauteils, insbesondere eines Schachtbauteils, sowie die Haftung der einzelnen Druckschichten untereinander sind so optimierbar.

Es kann im Rahmen der vorliegenden Erfindung vorgesehen sein, dass der Thermoplast Zusätze enthält, die das Wärmeleitvermögen verbessern, wie beispielsweise Kreide, Talkum oder Bornitrid, um so vorteilhafterweise die bei einem Materialabtrag freiwerdende Wärme abzuleiten.

Dabei hat es sich weiterhin als vorteilhaft herausgestellt bei dem Verfahren zur Herstellung eines Bauteils, insbesondere eines Schachtbauteils, dass das Basiselement aus wenigstens einer Einzelplatte besteht.

Es liegt jedoch auch im Rahmen der Erfindung, dass das Basiselement schichtweise aus wenigstens zwei miteinander verbundenen Einzelplatten aufgebaut ist. Hierdurch ist einerseits eine wirtschaftliche und kostengünstige Herstellung realisierbar und andererseits ist die Stabilität/Festigkeit des Basiselements optimal einstellbar, wobei eine mögliche Verzugsneigung reduziert ist.

Dabei hat es sich als vorteilhaft herausgestellt, dass die wenigstens zwei Einzelplatten des Basiselements miteinander stoffschlüssig verbunden sind durch eine Verklebung, insbesondere auch eine Verschweißung, die über die gesamte Fläche der wenigstens zwei Einzelplatten realisiert ist.

Es liegt auch im Rahmen der Erfindung, dass das Basiselement aus mehr als zwei Einzelplatten aufgebaut ist. Je nach Anforderungen an das Bauteil, insbesondere Schachtbauteil kann das Basiselement drei, vier, fünf, sechs, sieben, acht oder mehr Einzelplatten aufweisen, die wieder jeweils unterschiedliche Schichtdicken bzw. Durchmesser aufweisen können.

Es liegt weiterhin im Rahmen der Erfindung, dass das Basiselement als Netz bzw. Gitter; als Vlies bzw. als Matte und dergleichen ausgebildet ist. Bevorzugt ist wenigstens eine oder mehrere der Einzelplatten des Basiselements aus einem Netz bzw. Gitter; aus einem Vlies bzw. Matte ausgebildet. Die restlichen Einzelplatten des Basiselements können dabei aus massiven Platten und oder aus additiv gefertigten Schichten bestehen.

Besonders bevorzugt besteht das Basiselement aus einer oder mehreren Einzelplatten, welche als Netz und/oder Gitter ausgeführt sind, die weiteren Einzelplatten bestehen aus additiv gefertigten Schichten.

Diese Netze bzw. Gitter; Vliese und/oder Matten sind vorteilhafterweise aus Metallen oder Thermoplasten aufgebaut, bevorzugt aus Thermoplasten, wie beispielsweise bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist, besonders bevorzugt einem Polyolefin, und ganz besonders bevorzugt aus einem Polypropylen hergestellt wird oder ein solches enthält, besonders bevorzugt aus dem ersten bzw. dem zweiten bzw. dem dritten Thermoplast, oder nahliegenden Abwandlungen davon.

Diese Vliese bzw. Matten weisen vorteilhafterweise ein Flächengewicht von etwa 10 bis 1.000 kg/ m², bevorzugt etwa 20 bis 500 kg/m² gemäß DIN EN 12127:1997-12 auf.

Die Netze/ Gitter weisen eine Maschenweite von etwa 2 bis 25 mm bei einer Stärke, der die Maschen bildenden Fäden/ Elemente von etwa 0,2 bis 10 mm, bevorzugt eine Maschenweite von etwa 3 bis 15 mm bei einer Stärke, der die Maschen bildenden Fäden/ Elemente von etwa 1 bis 3 mm auf.

Als ebenfalls vorteilhaft bei dem Verfahren zur Herstellung eines Bauteils, insbesondere eines Schachtbauteils hat sich herausgestellt, dass das Basiselement eine Schichtdicke von etwa 1 bis 100 mm, bevorzugt 5 bis 50 mm, besonders bevorzugt 10 bis 40 mm aufweist.

Weiterhin vorteilhaft bei dem Verfahren zur Herstellung eines Bauteils, insbesondere eines Schachtbauteils hat sich herausgestellt, dass das Basiselement, sowie der additive gefertigte Teil einen Durchmesser von etwa 50 bis 2000 mm, bevorzugt 60 bis 1800 mm, besonders bevorzugt 60 bis 1600 mm aufweist.

In einer besonderen Ausführung kann es sein, dass das Basiselement, sowie der additiv gefertigte unterschiedliche Durchmesser haben.

In einer weiteren besonderen Ausführung kann es sein, dass das Basiselement und/ oder der additive gefertigte Teil in der Geometrie eines Kegelstumpfes, also mit variablen Außendurchmesser ausgeführt sind. Hierdurch sind Bauteile, insbesondere Schachtbauteil mit einem geringen bzw. optimalen Materialeinsatz individuell gestaltbar/fertigbar, die den jeweiligen Anforderungen an den Einbau, die Geometrie der anzuschließenden Leitungen und dergleichen zur Verfügung stellbar sind.

Das Verfahren zur Herstellung eines Bauteils, insbesondere eines Schachtbauteils, ist somit besonders bei der Herstellung von großen Bauteilen, beispielsweise mit einer Grundfläche von mindestens 0,3 m², insbesondere mindestens 0,5 m² von Vorteil. Weiterhin ist es mit diesem Verfahren wirtschaftlich und kostengünstig möglich, großvolumige Bauteile, insbesondere Schachtbauteile zur Verfügung zu stellen, deren Außenvolumen zweckmäßigerweise mehr als 50 l, bevorzugt mehr als 100 l, besonders bevorzugt mehr als 250 l aufweisen. Das Außenvolumen eines Bauteils, insbesondere eines Schachtbauteils ist jenes Volumen, welches von einer gedachten geschlossenen, an der Außenwandung des Bauteils, insbesondere des Schachtbauteils, flächig anliegenden sowie Bauteilöffnungen flächig überdeckenden Begrenzung, umschlossen wird.

Für die Herstellung des Bauteils, insbesondere Schachtbauteil unter Verwendung der additiver Fertigungsverfahren wird mit Vorteil ein datenverarbeitungsmaschinenlesbares dreidimensionales Modell für die Herstellung genutzt.

Die Erfindung umfasst auch ein Verfahren zur Erzeugung eines datenverarbeitungsmaschinenlesbaren dreidimensionalen Modells zur Verwendung in einem Herstellungsverfahren für ein Bauteil, insbesondere Schachtbauteil. Hierbei umfasst das Verfahren insbesondere auch die Eingabe von Daten, die ein Bauteil, insbesondere Schachtbauteil darstellen, in eine Datenverarbeitungsmaschine und die Nutzung der Daten, um ein Bauteil, insbesondere Schachtbauteil als dreidimensionales Modell darzustellen, wobei das dreidimensionale Modell geeignet ist zur Nutzung bei der Herstellung eines Bauteils, insbesondere Schachtbauteils.

Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf ein Bauteil, insbesondere Schachtbauteil abgegeben wird und die reflektierte Energie empfangen wird, und wobei ein virtuelles dreidimensionales Modell eines Bauteils, insbesondere Schachtbauteils unter Verwendung einer computerunterstützten Design-Software erzeugt wird.

Das additive Fertigungsverfahren kann ein additives Pulverbettverfahren, insbesondere selektives Lasersintern (SLS), selektives Hitzesintern (Selective Heat Sintering - SHS), oder Verfestigen von Pulvermaterial mittels Binder (Binder Jetting) umfassen. Das Fertigungsverfahren des Weiteren ein Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM), Fused Filament Fabrication (FFF) oder Fused Granular Modelling (FGF) umfassen. Das additive Fertigungsverfahren kann ebenso ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren optional andere generative Schichtaufbauverfahren, insbesondere Laminated Object Modelling (LOM), 3D-Siebdruck oder die Lichtgesteuerte Elektrophoretische Abscheidung umfassen. Bevorzugt umfasst das additive Fertigungsverfahren ein Schmelzeschichtungsverfahren wie Fused Deposition Modeling (FDM), Fused Filament Fabrication (FFF) oder Fused Granular Modelling (FGF). Besonders bevorzugt umfasst das additive Fertigungsverfahren Fused Granular Fabrication (FGF) bei dem der Thermoplast in granularer Form mit Hilfe eines Extruders aufgeschmolzen wird.

Die Lösung der Aufgabe, einen Schacht anzugeben, erfolgt mit den Merkmalen gemäß Anspruch 8.

Es wurde im Rahmen der vorliegenden Erfindung erkannt, dass ein Schacht, welcher ein Schachtbauteil, wie vorstehend beschrieben, umfasst, ganz besonders vorteilhaft ist, da ein solcher Schacht genau nach der Planung fertigbar, in kürzester Zeit lieferbar und einfach einbaubar ist.

Ein solcher Schacht kann dabei zusammengesetzt sein aus einem Schachtbauteil in Form eines Schachtunterteils und weiteren Bauteilen, wie beispielsweise einem oder mehreren Schachtmittelteilen, einem Schachtoberteil, einem Bauteil, das den Schacht zur Erdoberfläche hin abschließt oder vergleichbares. In einer bevorzugten Ausführung der Erfindung kann vorgesehen sein, dass diese miteinander fluiddicht verbunden sind.

Die Lösung der letzten Aufgabe der Erfindung, ein Fluidleit-, -aufnahme- und - speichersystem anzugeben, erfolgt mit den Merkmalen gemäß Anspruch 9.

Ein solches Fluidleit-, -aufnahme- und -speichersystem ist durch das Vorsehen eines Schachts wie vorstehend beschrieben, besonders aufgewertet.

Anwendung findet die vorliegende Erfindung insbesondere im Bereich der Kanal- und Abwassertechnik.

Durch die vorliegende Erfindung können Schachtbauteile und Schächte ohne großen Aufwand genau nach vorgegebener Spezifikation gefertigt werden.

Neben der geschilderten Anwendung gibt es weitere Anwendungsfelder in der Regenwasserbewirtschaftung, bei Hausanschlüssen, in Kläranlagen, in der Schwimmbadtechnik, in der Industrie, in der Landwirtschaft und in weiteren Bereichen.

Weitere wichtige Merkmale und Vorteile der Erfindung ergeben sich aus den Unteransprüchen, aus den Figuren und aus den zugehörigen Figurenbeschreibungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Figuren dargestellt und werden in der nachfolgenden Beschreibung näher erläutert.

Hierzu zeigt:
- Fig. 1a:: eine Vorrichtung zur Durchführung des erfindungsgemäßen Verfahrens
- Fig. 1b:: die Ansicht A in Fig. 1a
- Fig. 2:: eine schematische perspektivische Ansicht eines Bauteils, insbesondere eines als Halbzeug ausgebildeten Schachtbauteils;
- Fig. 3:: eine schematische perspektivische Ansicht eines weiteren Bauteils, insbesondere eines Schachtbauteils.

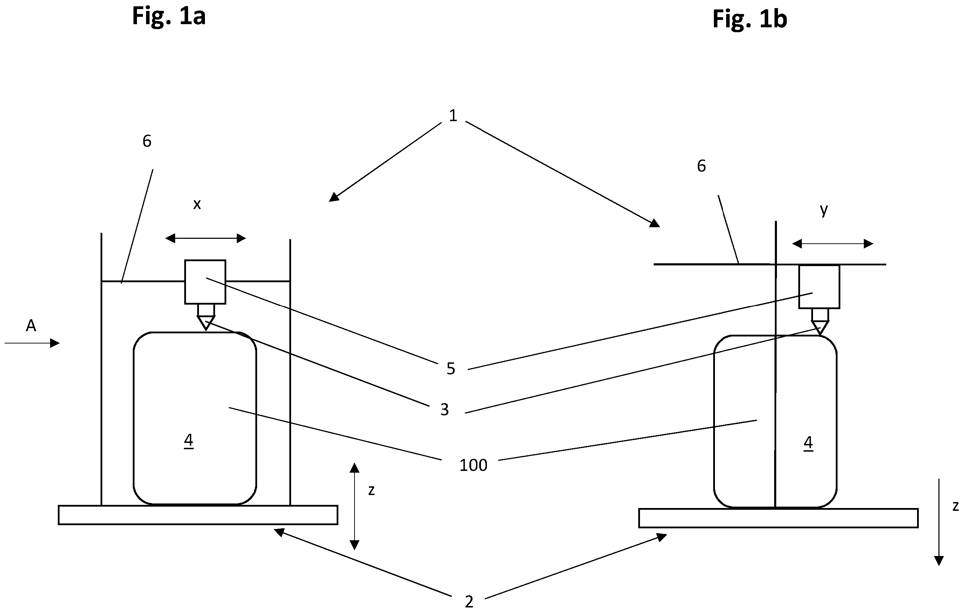

Die Fig. 1a, b zeigen eine 3D-Druckvorrichtung 1 zur Herstellung eines Bauteils, insbesondere Schachtbauteils 100, im Wege einer additiven Fertigung.

Die 3D-Druckvorrichtung 1 weist einen in vertikale Richtung z verschiebbaren Drucktisch 2 (Fig. 1a) für das herzustellende Bauteil, insbesondere Schachtbauteils 100 sowie eine in horizontaler Ebene, also die Raumrichtungen x, y verfahrbare Düse 3 auf, aus der der Werkstoff 4 des Bauteils, insbesondere Schachtbauteils 100 in Form einer thermoplastischen (ggf. auch Verstärkungsstoffe bzw. -fasern enthaltende) Polymerschmelze, bevorzugt aus einem Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan oder ein Polyamid, oder einem Polyester oder einem Styrolcopolymer austritt. Die Polymerschmelze wird mit Hilfe eines nicht dargestellten Extruders bereitgestellt, mit dem z.B. in Granulatform vorliegendes Polymer aufgeschmolzen wird.

Das Bauteil, insbesondere Schachtbauteil 100 wird durch schichtweises Auftragen des Polymers im Schmelzezustand auf ein nicht dargestelltes Basiselement erzeugt, wobei hierzu im Ausführungsbeispiel der Drucktisch 2 gemäß dem Fortschritt der Bauteilerzeugung immer weiter nach unten abgesenkt wird (Fig. 1b).

Die Düse 3 ist im Ausführungsbeispiel auf einem Schlitten 5 montiert, der in der Horizontalebene x, y an Schienen 6 geführt ist.

Alternativ hierzu ist es auch denkbar, dass die Düse 3 an einem Roboterarm befestigt ist, der vorteilhafterweise Bewegungen in mehr als drei Achsen ermöglicht (nicht dargestellt). Ferner kann die Düse 3 auch auf einem Gestell montiert sein, welches eine Verfahrbarkeit in vertikale Raumrichtung z sowie eine horizontale Verfahrbarkeit in eine Raumrichtung x (also insgesamt in einer vertikalen Ebene - Fig. 1a) ermöglicht, wobei die Verfahrbarkeit in eine weitere horizontale Raumrichtung y (also quer, insbesondere senkrecht zur vertikalen Ebene - Fig. 1b) durch eine entsprechend bewegbare Auflageplatte gewährleistet ist.

Die Düse 3 ist beheizbar ausgebildet und an einen (nicht dargestellten) Extruder angeschlossen, welcher granulatförmiges Polymermaterial aufschmilzt und zur Düse 3 fördert.

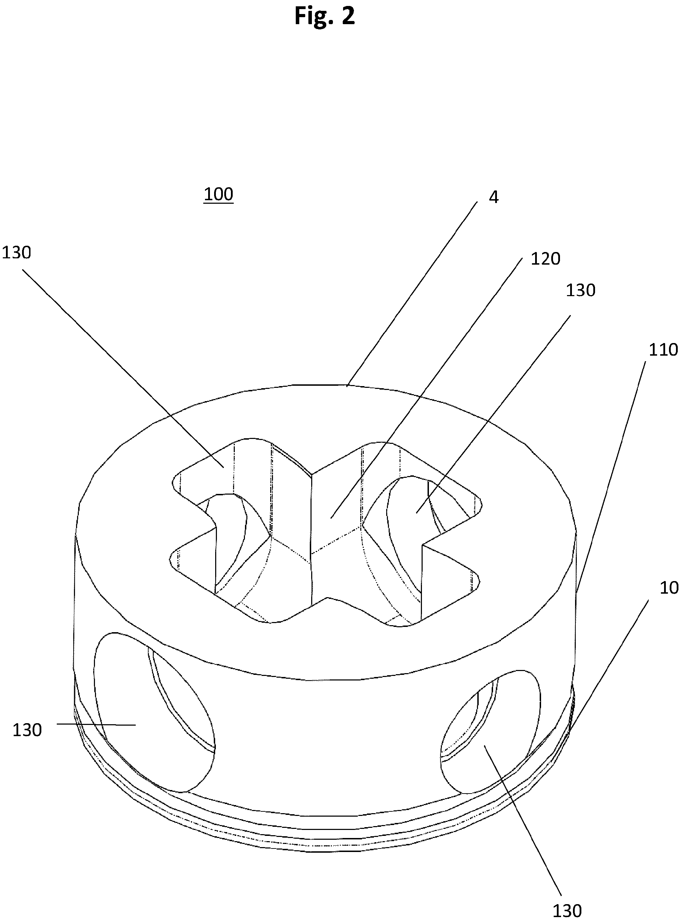

In der **Figur 2** ist eine schematische perspektivische Ansicht eines Bauteils, insbesondere eines als Halbzeug ausgebildeten Schachtbauteils 100 dargestellt.

Das Bauteil, insbesondere eines als Halbzeug ausgebildeten Schachtbauteil 100 weist dabei wenigstens ein Gerinne 120, wenigstens einen Rand 110 sowie wenigstens zwei Anschlüsse 130 auf.

Das Bauteil, insbesondere Schachtbauteil 100 wurde dabei im Wege der additiven Fertigung, wobei die additive Fertigung auf einem Basiselement 10 erfolgt, welches eine ebene Auflagefläche für die additive Fertigung bildet, hergestellt.

Das Basiselement 10 ist in diesem Ausführungsbeispiel rund und weist einen Durchmesser von etwa 120 cm auf. Das Basiselement 10 des Bauteiles, insbesondere Schachtbauteils 100 ist weiter einschichtig ausgebildet und weist eine Schichtdicke von etwa 10 mm auf. Das Basiselement 10 des Bauteils, insbesondere Schachtbauteils 100 ist in diesem Ausführungsbeispiel als Einzelplatte ausgebildet.

Es liegt jedoch ebenfalls im Rahmen der Erfindung, dass das Basiselement 10 aus mehr als einer Einzelplatte aufgebaut ist. Je nach Anforderungen an das Bauteil, insbesondere Schachtbauteil 100 kann das Basiselement 10 zwei, drei, vier, fünf, sechs, sieben, acht oder mehr Einzelplatten aufweisen, die wieder jeweils unterschiedliche Schichtdicken bzw. Durchmesser aufweisen können.

Als Werkstoff 4 für das Bauteil, insbesondere Schachtbauteil 100 wird ein Polymer, vorzugsweise ein erster Thermoplast verwendet.

Dabei wird auf dem Basiselement 10 das Gerinne 120, der Rand 110 sowie die wenigstens zwei Anschlüsse 130 wenigstens teilweise durch schichtweises Auftragen des Polymers im Schmelzezustand erzeugt.

Dabei kann das Gerinne 120 des Bauteils, insbesondere Schachtbauteils 100 über (hier nicht sichtbare) Stützelemente mit dem Rand 110 verbunden. Dies ist fertigungstechnisch möglich, um für das Bauteil, insbesondere Schachtbauteil 100 die erforderliche Steifigkeit sowie für diesen Verfahrensschritt eine ausreichende Stabilität zu realisieren.

Es liegt jedoch auch im Rahmen der Erfindung, dass das Gerinne 120 des Bauteils, insbesondere Schachtbauteils 100 beabstandet zum Rand 110 ohne Stützelemente durch schichtweises Auftragen des Polymers im Schmelzezustand erzeugt wird.

Der Rand 110 ist in diesem Ausführungsbeispiel etwa orthogonal und stoffschlüssig mit dem Basiselement 10 verbunden.

Im Rand 110 des Bauteils, insbesondere Schachtbauteils 100 sind Anschlüsse 130 angeordnet, welche in Wirkverbindung mit dem Gerinne 120 stehen. In diesem Ausführungsbeispiel sind in dem Rand 110 des Bauteils, insbesondere Schachtbauteils 100 vier Anschlüsse 130 angeordnet.

Der Werkstoff 4 für das Bauteil, insbesondere Schachtbauteil 100 ist ein Polymer, vorzugsweise ein erster Thermoplast, bevorzugt ein Polyolefin, besonders bevorzugt ein Polypropylen (PP) oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan, oder ein Polyamid, oder einem Polyester oder einem Styrolcopolymer.

Es liegt jedoch auch im Rahmen der Erfindung, dass der Werkstoff 4 für das Bauteil, insbesondere Schachtbauteil 100 bevorzugt wenigstens teilweise einen recycelten Thermoplast aufweist und/oder aus diesem besteht.

Das bei der additiven Fertigung des Bauteils, insbesondere Schachtbauteils 100 verwendete/ aufgetragene Polymer, vorzugsweise ein erster Thermoplast oder ein Duroplast, weist Füll- und/oder Verstärkungsstoffe von etwa 1 bis 45 Gew.-%, bevorzugt 1 bis 30 Gew.-%, besonders bevorzugt 5 bis 25 Gew.-%, bezogen auf das Gesamtgewicht, auf. In diesem Ausführungsbeispiel ist der Thermoplast ein Polyolefin, bevorzugt ein Polypropylen (PP) mit etwa 20 Gew.-%, bezogen auf das Gesamtgewicht, Glasfasern.

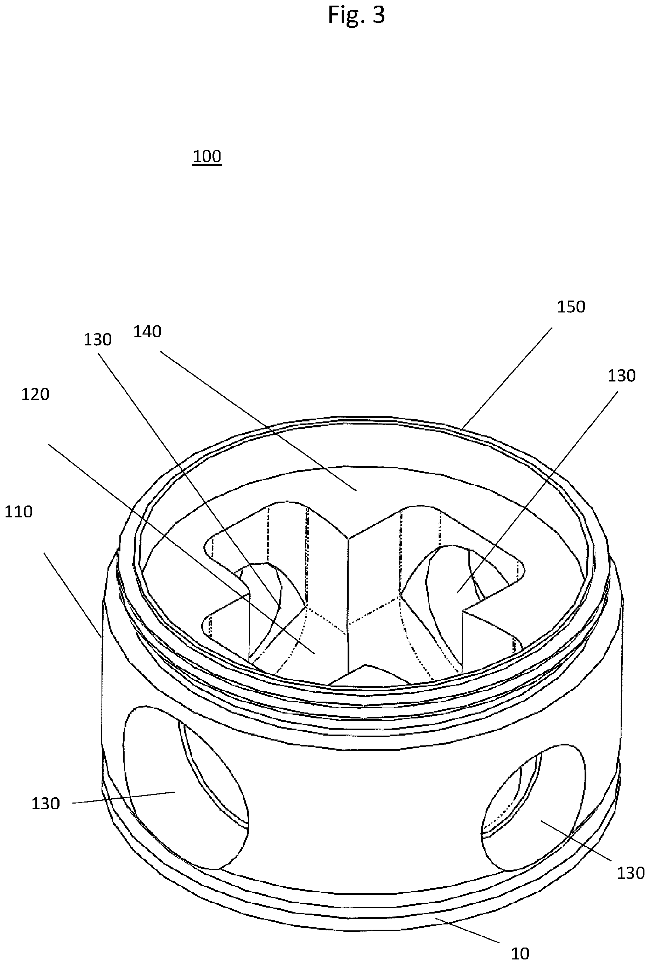

In der **Figur 3** ist eine schematische perspektivische Ansicht eines weiteren Bauteils, insbesondere Schachtbauteils 100 dargestellt.

Das Bauteil, insbesondere Schachtbauteil 100 ist analog zu dem in Figur 2 beschriebenen, ausgebildet.

In diesem Ausführungsbeispiel wird wenigstens ein Verbindungsabschnitt 150 mit dem Rand 110 des Bauteils, insbesondere Schachtbauteils 100 stoffschlüssig verbunden.

In diesem Ausführungsbeispiel wurde der Verbindungsabschnitt 150 durch Verschweißen, stoffschlüssig verbunden.

Vorteilhafterweise ist der Verbindungsabschnitt 150 vorgefertigt, standardisiert, sodass er für verschiedene Bauteile, insbesondere Schachtbauteile 100 universell einsetzbar ist.

Das Bauteil, insbesondere Schachtbauteil 100 ist so ausgebildet, dass es wenigstens ein Gerinne 120, wenigstens einen Rand 110 sowie wenigstens zwei Anschlüsse 130 aufweist. In diesem Ausführungsbeispiel ist das Bauteil, insbesondere Schachtbauteil 100 weiter so ausgebildet, dass es eine Auftrittsfläche 140 aufweist.

Das Verfahren zur Herstellung eines Bauteils, insbesondere eines Schachtbauteils 100 mit wenigstens einem Gerinne 120, wenigstens einem Rand 110, sowie wenigstens zwei Anschlüssen 130, erfolgt erfindungsgemäß im Wege der additiven Fertigung, wobei die additive Fertigung auf einem Basiselement 10 erfolgt, welches eine ebene Auflagefläche für die additive Fertigung bildet, wobei als Werkstoff 4 für das Bauteil ein Polymer, vorzugsweise ein erster Thermoplast oder ein Duroplast, verwendet wird, wobei das Gerinne 120, der Rand 110 sowie die wenigstens zwei Anschlüsse 130 wenigstens teilweise durch schichtweises Auftragen des Polymers im Schmelzezustand erzeugt wird, wobei wenigstens ein Verbindungsabschnitt 150 mit dem Rand 110 stoffschlüssig verbunden wird.

Dieses Verfahren zeichnet sich weiterhin dadurch aus, dass das Basiselement 10 in einem Spritzgussprozess und / oder in einem Extrusionsprozess und / oder in einem Kalandrierprozess und / oder in einem Gießprozess und / oder in einem Pressprozess und/oder in einem additiven schichtweisen Polymerauftragsprozess oder in einer Kombination der vorstehend Genannten gebildet wird.

Dabei ist das Basiselement 10 aus einem zweiten Thermoplast, insbesondere einem Polyolefin, und besonders bevorzugt aus einem Polypropylen hergestellt wird oder enthält ein solches.

Das Verfahren zeichnet sich weiterhin dadurch aus, dass das bei der additiven Fertigung aufgetragene Polymer, vorzugsweise ein erster Thermoplast, zumindest im Wesentlichen dem zweiten Thermoplast des Basiselements 10 entspricht. Ein weiterer Vorteil des Verfahrens ist, dass das bei der additiven Fertigung aufgetragene Polymer, vorzugsweise ein erster Thermoplast oder ein Duroplast, Füll- und/oder Verstärkungsstoffe von etwa 1 bis 45 Gew.-%, bevorzugt 1 bis 30 Gew.-%, besonders bevorzugt 5 bis 25 Gew.-%, bezogen auf das Gesamtgewicht, enthält.

Weiterhin vorteilhaft bei dem Verfahren ist, dass das Basiselement 10 schichtweise aus wenigstens zwei miteinander verbundenen Einzelplatten aufgebaut ist. Ebenso vorteilhaft bei dem Verfahren ist, dass das Basiselement 10 eine Schichtdicke von etwa 1 bis 100 mm, bevorzugt 5 bis 50 mm, besonders bevorzugt 10 bis 40 mm aufweist.

Das Verfahren zur Herstellung eines Bauteils, insbesondere eines Schachtbauteils 100 ist somit insbesondere bei der Herstellung von großen Bauteilen, beispielsweise mit einer Grundfläche von mindestens 0,3 m ², insbesondere mindestens 0,5 m ² von Vorteil.

Weiterhin ist es mit diesem Verfahren wirtschaftlich und kostengünstig möglich, großvolumige Bauteile, insbesondere Schachtbauteile 100 zur Verfügung zu stellen, deren Außenvolumen zweckmäßigerweise mehr als 50 l, bevorzugt mehr als 100 l, besonders bevorzugt mehr als 250 l aufweisen. Das Außenvolumen eines Bauteils, insbesondere eines Schachtbauteils ist jenes Volumen, welches von einer gedachten geschlossenen, an der Außenwandung des Bauteils, insbesondere des Schachtbauteils, flächig anliegenden sowie Bauteilöffnungen flächig überdeckenden Begrenzung, umschlossen wird.

Das Bauteil, insbesondere Schachtbauteil 100 ist dabei in dieser Ausführungsform als Schacht, insbesondere als Abwasserschacht mit zylindrischer Grundform, einen Durchmesser von etwa 120 cm, verschiedenen im Rand 110 vorgesehenen Anschlüssen 130 für den zu Zu- bzw. Ablauf von beispielsweise Abwasser ausgebildet.

## Patentansprüche

1. Verfahren zur Herstellung eines Bauteils, insbesondere eines Schachtbauteils (100) mit wenigstens einem Gerinne (120), wenigstens einem Rand (110), sowie wenigstens zwei Anschlüssen (130), im Wege der additiven Fertigung, wobei die additive Fertigung auf einem Basiselement (10) und/oder auf einem Drucktisch (2) erfolgt, welches eine ebene Auflagefläche für die additive Fertigung bildet, wobei als Werkstoff (4) für das Bauteil ein Polymer, vorzugsweise ein erster Thermoplast oder ein Duroplast, verwendet wird, wobei das Gerinne (120), der Rand (110) sowie die wenigstens zwei Anschlüsse (130) wenigstens teilweise durch schichtweises Auftragen des Polymers im Schmelzezustand erzeugt wird wobei wenigstens ein Verbindungsabschnitt (150) mit dem Rand (110) stoffschlüssig verbunden wird.

2. Verfahren nach Anspruch 1, **dadurch gekennzeichnet, dass** das Basiselement (10) in einem Spritzgussprozess und / oder in einem Extrusionsprozess und / oder in einem Kalandrierprozess und / oder in einem Gießprozess und / oder in einem Pressprozess und/oder in einem additiven schichtweisen Polymerauftragsprozess oder in einer Kombination der vorstehend Genannten gebildet wird.

3. Verfahren nach Anspruch 1 oder 2, **dadurch gekennzeichnet, dass** das Basiselement (10) aus einem zweiten Thermoplast, insbesondere einem Polyolefin, und besonders bevorzugt aus einem Polypropylen hergestellt wird oder ein solches enthält.

4. Verfahren nach Anspruch 1 oder 2, **dadurch gekennzeichnet, dass** das Basiselement (10) aus einem Duroplast, insbesondere aus einem Kondensationsharz wie Aminoharz, Phenolharz, Harnstoffharz sowie Melaminharz, aus einem Reaktionsharz wie Epoxidharz, Polyurethane (vernetzbar), Polyesterharze (ungesättigt), aus Isocyanaten, Acrylaten, Methacrylaten, Cyanatharz, Benzoxazinharz, sowie Kombination dieser hergestellt wird oder ein solches enthält.

5. Verfahren nach einem der vorhergehenden Ansprüche, **dadurch gekennzeichnet, dass** das bei der additiven Fertigung aufgetragene Polymer, vorzugsweise ein erster Thermoplast oder ein Duroplast, Füll- und/oder Verstärkungsstoffe von etwa 1 bis 45 Gew.-%, bevorzugt 1 bis 30 Gew.-%, besonders bevorzugt 5 bis 25 Gew.-%, bezogen auf das Gesamtgewicht, enthält.

6. Verfahren nach einem der vorhergehenden Ansprüche, **dadurch gekennzeichnet, dass** das Basiselement (10) schichtweise aus wenigstens zwei miteinander verbundenen Einzelplatten (21,22) aufgebaut ist.

7. Verfahren nach einem der vorhergehenden Ansprüche, **dadurch gekennzeichnet, dass** das Basiselement (10) eine Schichtdicke von etwa 1 bis 50 mm, bevorzugt 5 bis 40 mm, aufweist.

8. Schacht hergestellt mit einem Verfahren nach einem der Ansprüche 1 bis 7 und wenigstens einem mit dem Schachtbauteil (100) verbundenem Bauteil.

9. Fluidleit-, -aufnahme- und -speichersystem mit wenigstens einem Schacht nach Anspruch 8.
